# EUROPÄISCHE PATENTSCHRIFT

(11) **EP 1 239 989 B1**
(45) Veröffentlichungstag und Bekanntmachung des Hinweises auf die Patenterteilung: **01.10.2003**
(21) Anmeldenummer: 00976066.1
(22) Anmeldetag: 22.11.2000
(51) Int. Cl.: B23C 5/10

(54) **KUGELBAHNFRÄSER, SCHNEIDPLATTE HIERFÜR UND VERFAHREN ZUR HERSTELLUNG VON KUGELBAHNEN**
BALL RACEWAY MILLING DEVICE, CUTTING PLATE FOR THE SAME AND METHOD FOR PRODUCING A BALL RACEWAY
FRAISE DE CHEMINS DE ROULEMENT A BILLES, PLAQUETTE DE COUPE CORRESPONDANTE ET PROCEDE POUR LA FABRICATION DE ROULEMENT A BILLES

(30) Priorität: 25.11.1999 DE 19956592
(43) Veröffentlichungstag der Anmeldung: 18.09.2002
(73) Patentinhaber: SANDVIK AKTIEBOLAG, 811 81 Sandviken (SE)
(72) Erfinder: SCHERBARTH, Stefan, D-41462 Neuss (DE)
(74) Vertreter: Weber, Dieter, Dr.
(86) Internationale Anmeldenummer: EP0011621
(87) Internationale Veröffentlichungsnummer: WO01038029

(56) Entgegenhaltungen:
- WO-A-95/00272
- WO-A-99/00207
- US-A- 4 844 643

## Beschreibung

Die vorliegende Erfindung betrifft eine Schneidplatte für einen Kugelbahnfräser sowie einen entsprechenden Kugelbahnfräser selbst. Insbesondere weist eine solche Schneidplatte eine obere und eine untere Fläche auf, die im wesentlichen parallel zueinander verlaufen, wobei umlaufende Randflächen die obere Fläche und die untere Fläche miteinander verbinden und wobei Schneidkanten zumindest teilweise an den Schnittlinien zwischen Randflächen und der oberen und/oder unteren Fläche ausgebildet sind. Das Merkmal, daß die obere und die untere Fläche im wesentlichen parallel zueinander verlaufen, schließt selbstverständlich kleine Abweichungen von der Parallelität sowie Konturierungen durch Spanleit- und Spanbrechstrukturen nicht aus.

Ebenso betrifft die vorliegende Erfindung einen entsprechenden Kugelbahnfräser, der einen Schaft, einen Schneidkopf und eine Fräserachse aufweist, wobei am vorderen freien Ende des Schneidkopfes mindestens ein Sitz für eine entsprechende Schneidplatte vorgesehen ist.

Schließlich betrifft die vorliegende Erfindung auch ein Verfahren zur Herstellung von Kugelbahnen mit Hilfe von mit Schneidplatten ausgerüsteten Kugelbahnfräsern, wobei jeweils aktive Haupt- und Nebenschneidkanten der Schneidplatten in Eingriff kommen.

Entsprechende Kugelbahnfräser und Schneidplatten hierfür sind im Stand der Technik bereits seit längerem bekannt und sie werden verwendet, um durch Fräsen unter einem Sturzwinkel α sogenannte Kugelbahnen herzustellen, das heißt Nuten mit einem runden, allerdings im allgemeinen nicht exakt kreisförmigen Querschnitt. Vielmehr ist der Nutquerschnitt so ausgebildet, daß der Krümmungsradius am Grund der Nut kleiner ist als der Kugelradius, den die Kugeln haben, die auf dieser Laufbahn abrollen sollen. Auch die Tiefe dieser Nut ist im allgemeinen geringer als der Kugelradius, wobei die seitlichen Flanken der Nut im Querschnitt einen Krümmungsradius haben, der etwas größer ist als der Radius der darauf abrollenden Kugeln, so daß die in der Kugelbahn abrollenden Kugeln die Kugelbahn im wesentlichen nur in den Flankenbereichen berühren und weder mit dem Nutgrund noch mit den oberen Rändem der Nut in Eingriff kommen. Dies ermöglicht eine sehr exakt definierte Position der Kugeln bei gleichzeitig geringem Rollwiderstand, so daß über entsprechende Kugelbahnen verschiedene Maschinenteile verbunden werden können, die gegeneinander leicht beweglich sein sollen, selbst wenn sie relativ schwer sind und/ oder große Kräfte zwischen diesen Maschinenteilen (und über die dazwischen liegenden Kugeln) übertragen werden sollen. Im Idealfall ist der Kugelbahnquerschnitt im wesentlich elliptisch mit einer Exzentrizität von 1.01 bis 1.1 und einer die Kugelbahn symmetrisch teilenden großen Halbachse, wobei die kleine Halbachse geringfügig größer ist als der Radius der Kugeln, die auf der Bahn abrollen sollen, und die Exzentrizität dabei so auf den Kugelradius abgestimmt ist, daß die Auflagepunkte der Kugeln auf der Bahn, im Kugelquerschnitt gesehen, etwa 70° bis 90° auseinander liegen, also auf den Flanken der Kugelbahn um etwa 35° bis 45° von deren Grund entfernt.

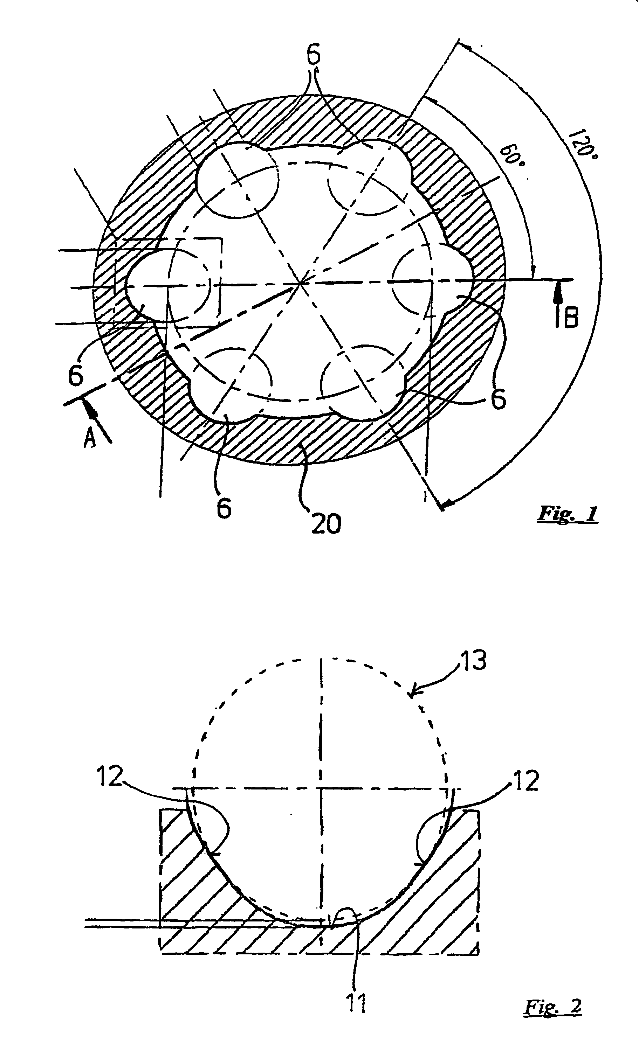

Figur 1 zeigt beispielhaft einen Querschnitt durch einen sogenannten Gelenkzapfen in Form einer mehr oder weniger zylindrischen Buchse, in deren Innenfläche axial oder auch leicht geneigt zur Achse mehrere Kugelbahnen verlaufen, die im Querschnitt nahezu teilkreisförmig erscheinen.

Figur 2 zeigt in einer vergrößerten Detailansicht, daß der Querschnitt der entsprechenden Kugelbahnen nicht kreisförmig, sondern eher elliptisch ist und im wesentlichen gekennzeichnet ist durch einen Krümmungsradius am Grund der Kugelbahn, der etwas kleiner ist als der Kugelradius und durch einen Krümmungsradius im Flankenbereich der Nut bzw. Kugelbahn, der größer ist als der Kugelradius. Im oberen Bereich übersteigt die Nutbreite im allgemeinen den Kugeldurchmesser, zumindest den Durchmesser der Kugel auf Höhe der Nutkanten.

Entsprechende Kugelbahnen werden, wie bereits erwähnt, im Stand der Technik mit speziellen Kugelbahnfräsern hergestellt, die unter einem sogenannten Sturzwinkel α zur Werkstückoberfläche angeordnet werden und in deren Stirnbereich sich mindestens eine speziell geformte Schneidplatte befindet, mit welcher die gewünschte Nutform gefräst wird. Der sogenannte Sturzwinkel ist der Winkel zwischen der Fräserachse und Achse der Kugelbahn bzw. der Tangente an die Achse in dem Abschnitt der Kugelbahn, der gerade in Bearbeitung ist. Ein solcher Sturzwinkel liegt typischerweise im Bereich zwischen 10° und 40°.

Die Schneideinsätze, die im Stimbereich des Fräser verwendet werden, haben üblicherweise eine nahezu kreisförmige, manchmal in der Draufsicht geringfügig abgeplattete oder mehr oder weniger ovale Form. Sie schneiden sowohl mit einer stirnseitig am Fräser angeordneten Hauptschneidkante, die eine Richtungskomponente sowohl in axialer Richtung als auch in einer zur Fräserachse senkrechten Ebene hat, und einer Nebenschneidkante, die eine zur Achse des Fräsers stärker parallele Richtungskomponente hat. Bei Verwendung von ovalen bzw. nahezu kreisrunden Schneidplatten sind Haupt- und Nebenschneidkanten selbstverständlich gerundet und der Übergang von der Hauptschneidkante zur Nebenschneidkante erfolgt praktisch kontinuierlich, ohne daß man zunächst Haupt- und Nebenschneidkanten eindeutig unterscheiden kann. Allgemein läßt sich aber dieser Stand der Technik dahingehend charakterisieren, daß in dem als "Hauptschneidkante" bezeichneten Schneidkantenabschnitt die radiale Komponente des Schneidkantenverlaufs überwiegt, während die Nebenschneidkante durch eine stärkere axiale Komponente dieses Verlaufs definiert wird.

Das Einstellen der Fräserachse in dem erwähnten Sturzwinkel zur Oberfläche des Werkstückes bewirkt dabei, daß der Nutgrund von einem Teil bzw. Abschnitt der Schneidkante der Schneidplatte geschnitten wird, der in axialer Richtung relativ weit vom liegt und von der Fräserachse einen kleineren Abstand hat als Teile der axial weiter zurückversetzten Nebenschneidkante. Dies bedeutet, daß der Nutgrund von einem auf einer kleineren Kreisbahn umlaufenden Schneidkantenabschnitt gebildet wird und damit einen kleineren (wenn auch zusätzlich vom Sturzwinkel abhängigen) Krümmungsradius hat als die Flankenabschnitte der Nut bzw. Kugelbahn, die von den sowohl axial weiter hinten liegenden als auch radial von der Fräserachse weiter entfernt liegenden Nebenschneidkantenbereichen geschnitten werden, die aber aufgrund der schrägen Anstellung des Fräsers zur Werkstückoberfläche den Nutgrund nicht erreichen können.

Im Ergebnis erhält man die in Figur 2 prinzipiell dargestellte, zumindest in etwa elliptische Querschnittsform der Nut.

Ein Nachteil der bekannten Schneidplatten und Kugelbahnfräser liegt allerdings darin, daß für jeden Kugeldurchmesser, der eine entsprechend angepaßte Kugelbahn erfordert, ein eigens auf die entsprechenden Kugelbahnmaße abgestimmter Schneideinsatz bzw. eine Schneidplatte zusammen mit einem Fräser verwendet werden muß, der den geeigneten Durchmesser hat. Da entsprechende Kugellager bzw. Kugelverbindungen mit den unterschiedlichsten Kugeldurchmessem verwendet und geplant werden, die typischerweise im Bereich zwischen 10 und 30 mm liegen, muß eine große Vielzahl unterschiedlicher Schneidplatten bereitgehalten werden, um für jeden Kugeldurchmesser passend die richtige Kugelbahn fräsen zu können. Dies bedeutet, daß die Schneidplatten für jeden einzelnen Kugeldurchmesser nur in vergleichsweise kleinen Stückzahlen benötigt werden und das dennoch der Hersteller entsprechender Kugelbahnen eine Vielzahl derartiger Schneidplatten bevorraten muß, um jedes gewünschte Kugelbahnmaß herstellen zu können. Hierdurch werden sowohl die einzelnen Schneidplatten als auch die Herstellung entsprechender Kugelbahnen sehr teuer.

Gegenüber diesem Stand der Technik liegt der vorliegenden Erfindung die Aufgabe zu Grunde, eine Schneidplatte und einen entsprechenden Kugelbahnfräser zu schaffen, die es ermöglichen, Kugelbahnen für unterschiedliche Kugeldurchmesser mit ein und dem selben Schneidplattentyp, wenn auch mit unterschiedlichen Fräserdurchmesser, herzustellen.

Des weiteren soll es durch die vorliegende Erfindung vorzugsweise auch ermöglicht werden, daß eine Kugelbahn von mehreren Schneiden erzeugt wird, die sich an verschiedenen Wendeschneidplatten befinden.

Hinsichtlich der Schneidplatte wird diese Aufgabe durch eine Schneidplatte gemäß Anspruch 1 gelöst.

Der Verlauf der Hauptschneide ist dabei nicht von entscheidender Bedeutung. Im allgemeinen verläuft die Hauptschneide im wesentlichen in radialer Richtung, das heißt überwiegend in einer Ebene senkrecht zur Fräserachse. Der Eckbereich bzw. die Eckschneide hat einen vergleichsweise kleinen Radius und die Nebenschneide verläuft, ausgehend von der Eckschneide, mit einer deutlichen axialen Komponente und radial noch weiter nach außen, ist jedoch ihrerseits gekrümmt und verläuft zumindest überwiegend leicht geneigt zur Fräserachse. Dies führt dazu, daß der Eckbereich, nämlich die runde Eckschneide, im Vergleich zu den radial äußersten und axial weiter hinten liegenden Teilen der Nebenschneide deutlich radial einwärts versetzt ist und gleichzeitig im vordersten Stirnbereich des Fräsers bzw. der Schneidplatte angeordnet ist. Bei einem entsprechenden Anstellen der Fräserachse in dem erwähnten Sturzwinkel bedeutet dies, daß der Nutgrund von dem Eckbereich bzw. der Eckschneide geschnitten wird, während die Nutflanken bzw. Kugelbahnflanken von der axial weiter zurück und radial weiter nach außen versetzten Nebenschneidkante geschnitten werden. Deren Krümmung stellt sicher, daß auch die Flankenabschnitte die gewünschte Krümmung erhalten, die aber zusätzlich auch von dem Fräserradius und von dem Sturzwinkel abhängt.

Mit den erfindungsgemäßen Wendeschneidplatten ist es möglich, Fräser in einem größeren Durchmesserbereich, z. B. mit einem Fräserdurchmesser zwischen 12 und 18 mm, mit ein und derselben Schneidplatte zu bestücken, um Kugelbahnen für entsprechend unterschiedliche Kugeldurchmesser in der selben Größenordnung von 12 bis 18 mm herzustellen. Um den gängigen Durchmesserbereich von 12 bis z. B. 27 mm abzudecken, sind daher nur zwei verschiedene Schneidplatten erforderlich, deren Krümmungsradien an den Eckschneiden und den Nebenschneidkanten entsprechend angepaßt sind.

Die Kosten für Herstellung und Lagerhaltung der speziellen Schneidplatten für Kugelbahnfräser können dadurch beträchtlich reduziert werden. Weiter erlaubt die Schneidplattenform auch ohne weiteres die Anbringung mehrere Schneideinsätze an einem Werkzeug, vorzugsweise von zwei oder drei Schneidplatten unter gleichen oder annähernd gleichen Winkelabständen. Bewußt vorgesehene kleine Abweichungen von gleichen Winkelabständen bewirken einen resonanzfreien und möglicherweise ruhigeren Lauf des Werkzeugs.

Dabei sind Ausführungsformen der Erfindung bevorzugt, bei welchen der Eckbereich jeweils tangential in die entsprechenden Nebenschneidkanten und auch in die Hauptschneidkante übergeht.

Besonders bevorzugt ist eine Ausführungsform der Erfindung, bei welcher der Übergang des Eckradius in den Nebenschneidkantenradius bei einem Übergangswinkel bzw. Anschlußwinkel τ erfolgt, der kleiner ist als der Sturzwinkel α, wobei der Anschlußwinkel τ definiert ist durch den Winkel, den die Tangente an die Schneidkante in diesem Übergangspunkt mit der gedachten Fräserachse in dem vorgesehenen Einbauzustand der Schneidplatte einschließt. Auf diese Weise wird sichergestellt, daß der Nutgrund tatsächlich durch den Eckbereich mit dem kleineren Radius geschnitten wird, während die ihrerseits runden Nebenschneidkante die Flankenbereiche schneidet.

Bevorzugt ist ein Anschlußwinkel im Bereich zwischen 10° und 25°, während der Sturzwinkel α zum Beispiel im Bereich von 12° bis 45° liegen kann. Generell ist der Anschlußwinkel τ vorzugsweise zwischen 2° und 12° kleiner als der Sturzwinkel, wobei der kleinere Differenzwert vorzugsweise bei kleinen Sturzwinkeln in Betracht kommt.

Der Radius der Eckschneide beträgt vorzugsweise zwischen 0,2 und 5 mm und insbesondere zwischen 0,4 und 2,4 mm. Dagegen ist der Radius der Nebenschneide deutlich größer und beträgt in der bevorzugten Ausführungsform der Erfindung zwischen 5 und 30 mm insbesondere zwischen 8 und 25 mm, wobei dieser Radius allerdings auch vom Fräserdurchmesser abhängt. Zweckmäßigerweise wird der Radius der Nebenschneide daher in Abhängigkeit von dem Fräserdurchmesser bestimmt, für welchen die Schneidplatte vorgesehen ist und in diesem Fall sollte der Nebenschneidenradius zwischen 0,7-fachen und 0,95-fachen des Fräserdurchmessers liegen, was umgekehrt bedeutet, daß für eine gegebene Schneidplatte mit einem gegebenen Nebenschneidenradius der Fräserdurchmesser entsprechend variieren kann, um die vorgenannte Bedingung zu erfüllen, wobei auch geringfügige Über- oder Unterschreitungen dieses Verhältnisses ohne weiteres toleriert werden können.

Die Schneidplatten können z. B. eine rechteckige, wahlweise aber auch eine dreieckige Grundform haben, wie sie im Stand der Technik an sich bekannt sind, wobei der Begriff "dreieckig" hier auch die sogenannten "Trigonformen" einschließt, während der Begriff "rechteckig" auch noch rhombische Platten umfassen soll. Wesentlich ist lediglich, daß eine der Dreieck- oder Rechteckseiten als stimseitige Hauptschneide Verwendung finden kann und so angeordnet werden kann, daß die Nebenschneide unter dem erwähnten Anschlußwinkel an die Eckschneide anschließt und im übrigen die bereits erwähnte Krümmung hat.

Besonders bevorzugt ist die Ausbildung der Schneidplatte als Wendeplatte, so daß nach dem Verschleiß einer Schneidkante eine andere Schneidkante zum Einsatz kommen kann. Im Falle rechteckiger Wendeplatten weist eine solche Platte an ihrer Oberseite vorzugsweise in den diagonal gegenüberliegenden Eckbereichen den Übergang zwischen Hauptschneide und Nebenschneid auf, so daß an der Oberseite je zwei Hauptschneiden und zwei Nebenschneiden mit einem dazwischen liegenden Eckbereich diagonal einander gegenüberliegen.

Bei einer solchen rechteckigen Wendeschneidplatte können allerdings auch an der Unterseite der Platte noch Schneidkanten vorgesehen werden, vorzugsweise in genau der gleichen Weise wie an der Oberseite, jedoch an den verbleibenden diagonal gegenüberliegenden Ecken.

Die Aufgabe wird auch durch einen kugelbahnfräse gemäß Anspruch 8 gelöst.

Hinsichtlich des eingangs genannten Verfahrens zur Herstellung von Kugelbahnen wird die der Erfindung zugrundeliegende Aufgabe durch ein Verfahren gemäß Anspruch 10 gelöst.

In der bevorzugten Ausgestaltung des erfindungsgemäßen Verfahrens verläuft die Hauptschneide im wesentlichen gerade, was einem sehr großen bzw. unendlich großen Krümmungsradius entspricht, und in radialer Richtung, während der Krümmungsradius der Nebenschneidkante im Bereich zwischen dem Halben und dem Zweifachen des Fräserradius (maximaler Halbmesser der Kugelbahn liegt. Im übrigen können bei dem erfindungsgemäßen Verfahren die Schneidplatten alle in den Ansprüchen definierten Merkmale haben.

Soweit in der vorliegenden Beschreibung und den Ansprüchen von in einem Radius gekrümmten Schneidkanten oder Schneidkantenabschnitten die Rede ist, versteht es sich, daß diese nicht unbedingt einen konstanten Krümmungsradius haben müssen, sonder dieser Radius auch im Verlauf der jeweiligen Abschnitte im Rahmen der in den Ansprüchen angegebenen Grenzen variieren kann oder auch durch einen Polygonzug kurzer gerader und gegeneinander abgewinkelter Abschnitte ersetzt werden kann, wenn sich im Mittel über den betreffenden Abschnitt hinweg Krümmungsmittelwerte ergeben, die in die beanspruchten Bereiche fallen.

Weitere Vorteile, Merkmale und Anwendungsmöglichkeiten der Erfindung werden deutlich an Hand der folgenden Beschreibung einer bevorzugten Ausführungsform und der dazugehörigen Figuren. Es zeigen:
- Figur 1: einen Schnitt durch einen Gelenkzapfen mit insgesamt 6 Kugelbahnen, die im wesentlichen im Querschnitt zu erkennen sind,
- Figur 2: eine Querschnitt durch eine Kugelbahn mit einer gestrichelt angedeuteten darin laufenden Kugel,
- Figur 3: ein Ausführungsbeispiel für einen erfindungsgemäßen Kugelfräser und
- Figur 4: eine vergrößerte Ansicht einer Wendeschneidplatte für eine Kugelbahnfräser gemäß einem Ausführungsbeispiel der vorliegenden Erfindung.

Wie bereits im Zusammenhang mit der Erläuterung des Standes der Technik erwähnt, werden Kugelbahnen für die Führung von Kugeln benötigt, die ihrerseits einen in mindestens einer Richtung kraftschlüssigen aber reibungsarmen Eingriff zwischen verschiedenen Teilen vermitteln sollen, die begrenzt gegeneinander beweglich sind. Die bekanntesten Beispiele hierfür sind selbstverständlich herkömmliche Kugellager, darüber hinaus aber auch viele andere Maschinenelemente, die reibungsarm und gegeneinander begrenzt beweglich miteinander verbunden werden sollen.

Figur 1 zeigt einen Gelenkzapfen 20 in Form eines Hohlzylinders, in dessen Innenfläche insgesamt sechs Kugellaufbahnen in Form von Nuten 6 eingefräst sind, die im wesentlichen axial mit einer hier nicht erkennbaren leichten Abwinkelung gegenüber der Achse des Zapfens 20 erstrekken.

Der Querschnitt der Kugelbahn, die im wesentlichen die Form einer runden Nut 6 hat, ist, wie man am besten in der Vergrößerung gemäß Figur 2 erkennt, nicht exakt teilkreisförmig, sondern weist am Nutgrund 11 einen kleineren Krümmungsradius auf als an den Nutflanken 12, wobei im übrigen die Nut in ihrem oberen Randbereich im allgemeinen die größte Breite hat, also im Regelfall nicht hinterschnitten ist, wenn auch im Prinzip hinterschnittene Nutflanken 12 denkbar wären. Wie man anhand der Figur 2 erkennt, rollt die gestrichelt angedeutete Kugel 13 in einer solchen Nut 6 auf den Nutflanken 12 ab und berührt nicht den Nutgrund 11. Dadurch ist aber die Position der Kugel 13 in Querrichtung der Nut 6 wesentlich genauer definiert als dies der Fall wäre, wenn die Kugel tatsächlich auf dem Nutgrund abrollen würde. Bei einer exakt auf den Kugeldurchmesser abgestimmten Nut mit Kreisquerschnitt wäre hingegen schon bei geringsten Toleranzüberschreitungen mit erheblicher Reibung zu rechnen. Durch die zwei gegenüberliegenden und beabstandeten Auflagepunkte der Kugel 13 im Bereich der Nutflanken 12 können außerdem größere Kräfte übertragen werden.

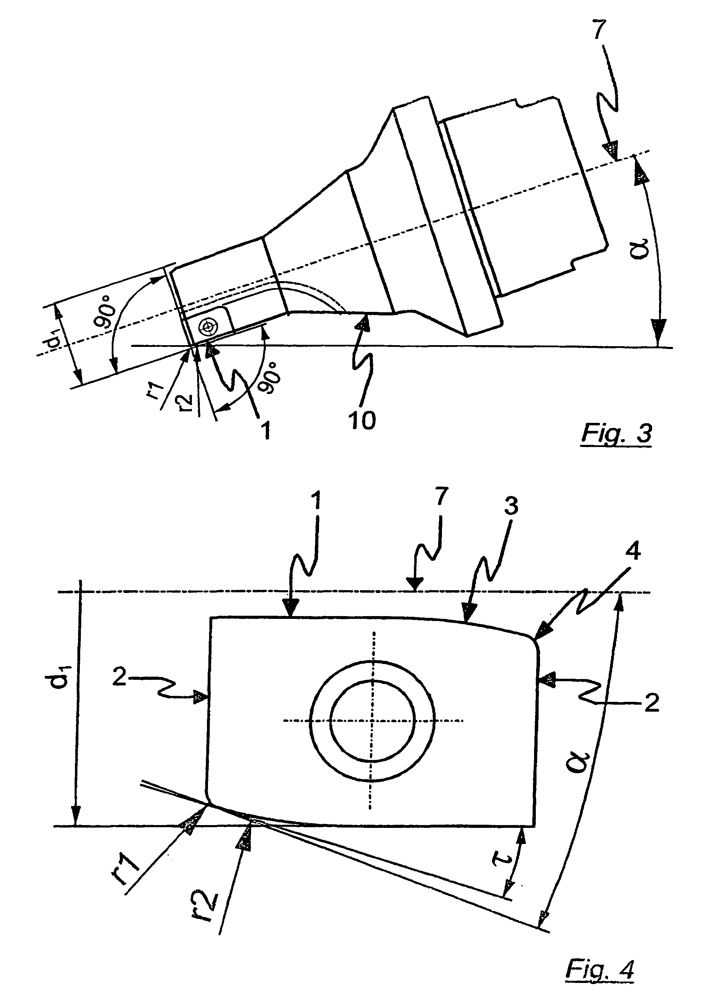

Figur 3 zeigt ein Ausführungsbeispiel für ein erfindungsgemäßes Fräswerkzeug 10, wobei es auf die genauere Ausgestaltung des Werkzeugschaftes dabei nicht ankommt, sondern in erster Linie auf die Tatsache, daß es an seinem vorderen Schneidkopf einen Plattensitz für eine Schneidplatte 1 aufweist, wie sie in der bevorzugten Ausführungsform in Figur 4 dargestellt ist. In Figur 3 ist eine Werkstückoberfläche bzw. die Arbeitsrichtung des Fräsers durch eine horizontale Linie angedeutet und die Fräserachse 7 ist gegenüber dieser Horizontalen um einen Winkel α angestellt, der in diesem Beispiel etwas größer als 20° ist. Die Hauptschneidkante 2 der Wendeschneidplatte 1, die man im vorderen Stirnbereich des Fräsers erkennt, verläuft im wesentlichen in einer radialen Ebene und schneidet den größten Teil des Materials aus dem Werkstück heraus. Der Nutgrund bzw. die innere Nutoberfläche wird geschnitten von der Eckschneide 4 und der Nebenschneide 3 die man in Figur 4 deutlicher erkennen kann.

In Figur 4 ist nochmals der Sturzwinkel α dargestellt, unter welchem die Schneidplatte 1 normalerweise arbeitet. Wie man erkennt, geht die Hauptschneide 2 über eine Eckschneide 4 mit einem relativ kleinen Radius r1 in eine Nebenschneide über, die ihrerseits noch einen Krümmungsradius r2 hat, der allerdings deutlich größer ist als der Radius r1. Weiterhin ist in Figur 4 die Tangente an den Übergangspunkt zwischen Eckschneide 4 und Nebenschneide 3 eingezeichnet und der sogenannte Anschlußwinkel τ, der definiert ist durch den Winkel dieser Tangente zu der Fräserachse 7 (in diesem Fall zu der geraden hinteren Verlängerung der Nebenschneidkante 3, die aber parallel zur Fräserachse 7 verläuft). Durch Verbindung mit Figur 3 ergibt sich aufgrund dieses Anschlußwinkels τ, daß der Nutgrund notwendigerweise von dem vor diesem Anschlußbereich liegenden Teil der Eckschneide 4 geschnitten werden muß, wohingegen höherliegende Flanketeile der Nut von den auf größerem Durchmesser angeordneten Schneidkantenabschnitten der Nebenschneide 3 erzeugt werden.

Auch bei einer Veränderung des Radius des Fräswerkzeuges, das heißt einer Versetzung der Schneidplatte 1 radial nach außen oder nach innen in Figur 1 ergibt sich kein grundsätzlich anderes Bild und auch der Sturzwinkel α kann in gewissen Bereichen variiert werden, so lange er größer bleibt als der Anschlußwinkel τ. Dieser ermöglicht es, Kugelbahnen mit unterschiedlichem Durchmesser bzw. mit unterschiedlichen Dimensionen für entsprechend unterschiedliche Kugeln mit ein und dem selben Schneidplattentyp herzustellen.

Es versteht sich, daß der in Figur 3 dargestellte Fräser in einer um 180° versetzten Position vorzugsweise eine weitere Schneidplatte aufweist oder aber auch in mehreren weiteren Positionen, die in gleichen oder annähernd gleichen Winkelabständen zu der dargestellten Schneidplatte 1 und relativ zueinander angeordnet sind, was insbesondere dann bevorzugt ist, wenn eine hohe Produktivität angestrebt wird, und was außerdem zu einem wesentlichen ruhigeren Lauf des Fräsers beiträgt.

## Patentansprüche

1. Schneidplatte (1) für Kugelbahnfräser, mit einer oberen Fläche sowie einer zu der oberen im wesentlichen parallelen unteren Fläche und mit umlaufenden Randflächen, die die obere Fläche und die untere Fläche miteinander verbinden, wobei Schneidkanten mindestens teilweise an den Schnittlinien zwischen Randflächen und der oberen Fläche gebildet werden, mit einer im wesentlichen in einer zur Fräserachse senkrechten radialen Ebene verlaufenden, stirnseitig am Fräser anzuordnenden Hauptschneide (2), **dadurch gekennzeichnet, daß** eine überwiegend axial nach hinten und teilweise radial nach außen verlaufende Nebenschneide (3) vorgesehen ist, mit einer in der Draufsicht auf die obere Fläche abgerundeten Eckschneide (4) am Übergang zwischen Hauptschneide (2) und Nebenschneide (3) mit einem Radius r1, wobei die Nebenschneide (3) einen Radius r2 aufweist, der deutlich größer als der Radius r1 der Eckschneide (4) und der kleiner als das Zweifache des Fräserdurchmessers ist, für welchen die Schneidplatte (1) vorgesehen ist, wobei der Übergangswinkel τ zwischen den Radien r1, r2 im Bereich zwischen 10° und 35° liegt und wobei die Schneidplatte für einen Gebrauch des Fräsers vorgesehen ist, bei welchem die Fräserachse einen Sturzwinkel α im Bereich zwischen 12° und 45° mit der Werkstückoberfläche einschließt.

2. Schneidplatte nach Anspruch (1), **dadurch gekennzeichnet, daß** die Nebenschneide (3) und die Hauptschneide (2) jeweils tangential in die abgerundete Eckschneide (4) einmünden.

3. Schneidplatte nach Anspruch (2), **dadurch gekennzeichnet, daß** die Tangente an die Eckschneide (4) und die Nebenschneide (3) am Übergang zwischen diesen beiden Schneiden mit der gedachten Fräserachse 7 in Einbaulage der Schneidplatte (1) einen Winkel (τ) einschließt, der kleiner ist als der Sturzwinkel (α), der für den Kugelbahnfräser vorgesehen ist.

4. Schneidplatte nach einem der Ansprüche 1-3, **dadurch gekennzeichnet, daß** der Radius der Eckschneide (4) zwischen 0,2 und 5 mm, vorzugsweise zwischen 0,4 und 2,4 mm und der Radius (r2) der Nebenschneide zwischen 5 und 35 mm, vorzugsweise zwischen 7 und 25 mm, insbesondere zwischen dem 0,7- und 0,95-fachen des Fräserdurchmessers liegt.

5. Schneidplatte nach einem der Ansprüche 1-4, **dadurch gekennzeichnet, daß** sie als Wendeschneidplatte mit mindestens 2 Haupt- und 2 Nebenschneiden ausgebildet ist.

6. Schneidplatte nach Anspruch 5, **dadurch gekennzeichnet, daß** sie eine dreieckige oder rechteckige Grundform hat, bzw. trigonförmig oder rhombisch ist.

7. Schneidplatte nach Anspruch 6, welche eine rechteckige Grundform hat, wobei an der Oberseite der Schneidplatte an diagonal gegenüberliegenden Ecken je eine Haupt- und eine Nebenschneide (2, 3) ausgebildet ist und wobei vorzugsweise auch an der Unterseite der Schneidplatte (1) an den verbleibenden diagonal gegenüberliegenden Ecken je eine Hauptund eine Nebenschneide ausgebildet ist.

8. Kugelbahnfräser mit einem Schaft mit einem Schneidkopf und einer Fräserachse (7), **dadurch gekennzeichnet, daß** der Schneidkopf mit einer Schneidplatte nach einem der Ansprüche 1 bis 7 ausgestattet ist.

9. Kugelbahnfräser nach Anspruch 8, **dadurch gekennzeichnet, daß** an der Stirnseite des Schneidkopfes und entlang seines Umfanges in gleichen oder annähernd gleichen Winkelabständen mehrere Schneidplatten nach einem der Ansprüche 1 bis 7 vorgesehen sind.

10. Verfahren zur Herstellung von Kugelbahnen mit Hilfe von mit Schneidplatten ausgerüsteten Kugelbahnfräsem, wobei jeweils aktive Haupt- und Nebenschneidkanten der Schneidplatten in Eingriff kommen, **gekennzeichnet durch** die Verwendung einer oder mehrerer Schneidplatten, bei welchen Haupt- und Nebenschheidkante **durch** eine Eckschrieide getrennt sind, deren Radius zwischen 0,2 und 5mm, vorzugsweise zwischen 0,4 und 2,5 mm liegt, während der Krümmungsradius von Haupt und Nebenschneide jeweils mindestens das Fünffache hiervon, vorzugsweise mehr als das Zehnfache des Radius der Eckschneide beträgt, wobei die Nebenschneide, ausgehend von der Eckschneide, gekrümmt mit einer deutlich axialen Komponente und radial weiter nach außen verläuft.

11. Verfahren nach Anspruch 10, **dadurch gekennzeichnet, daß** die Hauptschneide im wesentlichen gerade und radial verläuft, während der Krümmungsradius der Nebenschneidkante im Bereich zwischen dem Halben und dem Zweifachen des Fräserradius (maximaler Halbmesser der Kugelbahn) liegt.

12. Verfahren nach Anspruch 10 oder 11, **gekennzeichnet durch** die Verwendung von Schneidplatten nach einem der Ansprüche 1 bis 7.

## Claims

1. Cutting plate (1) for a ball raceway milling cutter, with an upper surface and a lower surface, essentially parallel to the upper one, with surrounding edge surfaces which connect the upper surface and the lower surface to each other, cutting edges being formed at least partially on the cutting lines between the edge surfaces and the upper surface, with a main cutter (2) running essentially in a radial plane perpendicular to the milling cutter axis and to be arranged on the end of the milling cutter, **characterized in that** a secondary cutter (3) running predominantly axially backwards and partially radially outwards is provided, with a comer cutter (4), rounded onto the upper surface seen from above, at the transition between the main cutter (2) and the secondary cutter (3) with a radius r1, the secondary cutter (3) having a radius r2 which is clearly greater than the radius r1 of the comer cutter (4) and which is smaller than twice the milling cutter diameter for which the cutting plate (1) is provided, the transition angle τ between the radii r1, r2 being in the range between 10° and 35° and the cutting plate being provided for a use of the milling cutter, in which the milling cutter axis forms a camber angle α in the range between 12° and 45° with the work piece surface.

2. Cutting plate according to claim (1), **characterized in that** the secondary cutter (3) and the main cutter (2) each run tangentially into the rounded comer cutter (4).

3. Cutting plate according to claim (2), **characterized in that** the tangent to the comer cutter (4) and the secondary cutter (3) at the transition between these two cutters forms an angle (τ) with the imaginary milling cutter axis 7 in the mounting position of the cutting plate (1) which is smaller than the camber angle (α) which is provided for the ball raceway milling cutter.

4. Cutting plate according to one of claims 1-3, **characterized in that** the radius of the corner cutter (4) is between 0.2 and 5 mm, preferably between 0.4 and 2.4 mm and the radius (r2) of the secondary cutter is between 5 and 35 mm, preferably between 7 and 25 mm, in particular between 0.7 and 0.95 times the milling cutter diameter.

5. Cutting plate according to one of claims 1-4, **characterized in that** it is developed as a turning cutting plate with at least 2 main and 2 secondary cutters.

6. Cutting plate according to claim 5, **characterized in that** it has a triangular or rectangular basic shape, or is trigonal or rhomboid.

7. Cutting plate according to claim 6, which has a rectangular basic shape, a main and a secondary cutter (2, 3) each being developed on the top of the cutting plate at diagonally opposite corners and a main and a secondary cutter each preferably also being developed on the bottom of the cutting plate (1) at the remaining diagonally opposite comers.

8. Ball raceway milling cutter with a shaft with a cutting head and a milling cutter axis (7), **characterized in that** the cutting head is equipped with a cutting plate according to one of claims 1 to 7.

9. Ball raceway milling cutter according to claim 8, **characterized in that** several cutting plates according to one of claims 1 to 7 are provided on the end of the cutting head and along its periphery at equal or roughly equal angular intervals.

10. Process for the manufacture of ball raceways with the help of ball raceway milling cutters equipped with cutting edges, active main and secondary cutting edges of the cutting plates engaging in each case, **characterized by** the use of one or more cutting plates in which main and secondary cutting edges are separated by a corner cutter, the radius of which is between 0.2 and 5 mm, preferably between 0.4 and 2.5 mm, while the radius of curvature of the main and secondary cutter is in each case at least five times this, preferably more than ten times the radius of the comer cutter, the secondary cutter, starting from the corner cutter, running in a curved manner with a clearly axial component and radially further outwards.

11. Process according to claim 10, **characterized in that** the main cutter runs essentially straight and radially; while the radius of curvature of the secondary cutting edge is in the range of between half and twice the milling cutter radius (maximum radius of the ball raceway).

12. Process according to claim 10 or 11, **characterized by** the use of cutting plates according to one of claims 1 to 7.

## Revendications

1. Plaquette de coupe (1) pour fraiseuse de couronne pivotante à billes présentant une surface supérieure, une surface inférieure sensiblement parallèle à la surface supérieure, des surfaces de bord périphériques qui relient entre elles la surface supérieure et la surface inférieure, les arêtes de coupe étant formées au moins partiellement au niveau de lignes de coupe entre des surfaces de bord et la surface supérieure, et une arête de coupe principale (2) s'étendant sensiblement dans un plan radial perpendiculaire à l'axe de la fraiseuse et destinée à être agencée du côté frontal de la fraiseuse, **caractérisée en ce qu'**il est prévu une arête de coupe secondaire (3) s'étendant surtout axialement vers l'arrière et en partie radialement vers l'extérieur et une arête de coupe de coin (4) arrondie avec un rayon r1 au niveau de la transition entre l'arête de coupe principale (2) et l'arête de coupe secondaire (3) lorsque la surface supérieure est vue de dessus, l'arête de coupe secondaire (3) ayant un rayon r2 qui est nettement supérieur au rayon r1 de l'arête de coupe de coin (4) et inférieur à deux fois le diamètre de la fraise pour laquelle la plaquette de coupe (1) est prévue, l'angle de transition r entre les rayons r1, r2 étant compris entre 10° et 35° et la plaquette de coupe étant prévue pour une utilisation de la fraise dans laquelle l'axe de la fraise fait avec la surface de la pièce à usiner un angle de dépouille α compris entre 12° et 45°.

2. Plaquette de coupe selon la revendication 1, **caractérisée en ce que** l'arête de coupe secondaire (3) et l'arête de coupe principale (2) convergent tangentiellement pour former l'arête de coupe de coin arrondie (4).

3. Plaquette de coupe selon la revendication 2, **caractérisée en ce que** la tangente à l'arête de coupe de coin (4) et à l'arête de coupe secondaire (3) forme, au niveau de la transition entre ces deux arêtes de coupe, avec l'axe imaginaire (7) de la fraise dans la position de montage de la plaquette de coupe (1), un angle (τ) qui est inférieur à l'angle de dépouille (α) qui est prévu pour la fraiseuse de couronne pivotante à billes.

4. Plaquette de coupe selon l'une des revendications 1 à 3, **caractérisée en ce que** le rayon de l'arête de coupe de coin (4) est compris entre 0,2 mm et 5 mm, avantageusement entre 0,4 mm et 2,4 mm et le rayon (r2) de l'arête de coupe secondaire est compris entre 5 mm et 35 mm, avantageusement entre 7 et 25 mm, en particulier entre 0,7 et 0,95 fois le diamètre de la fraise.

5. Plaquette de coupe selon l'une des revendications 1 à 4, **caractérisée en ce qu'**elle est conformée en plaquette de coupe réversible présentant au moins 2 arêtes de coupe principales et 2 arêtes de coupe secondaires.

6. Plaquette de coupe selon la revendication 5, **caractérisée en ce qu'**elle a une forme de base triangulaire ou rectangulaire resp. en triangle ou losange.

7. Plaquette de coupe selon la revendication 6 dont la forme de base est rectangulaire, dans laquelle une arête de coupe principale et une arête de coupe secondaire (2, 3) sont conformées du côté supérieur de la plaquette de coupe au niveau des coins diagonalement opposés et dans laquelle une arête principale et une arête de coupe secondaire sont conformées du côté inférieur de la plaquette de coupe (1) au niveau des autres coins diagonalement opposés.

8. Fraiseuse de couronne pivotante à billes comportant un arbre doté d'une tête de coupe et présentant un axe de fraiseuse (7), **caractérisée en ce que** la tête de coupe est conformée avec une plaquette de coupe selon l'une des revendications 1 à 7.

9. Fraiseuse de couronne pivotante à billes selon la revendication 8, **caractérisée en ce que** plusieurs plaquettes de coupe selon l'une des revendications 1 à 7 sont prévues du côté frontal de la tête de coupe et le long de sa périphérie à des distances angulaires égales ou à peu près égales.

10. Procédé de fabrication de couronne pivotante à billes à l'aide de fraiseuses à couronne pivotante à billes équipées de plaquettes de coupe, dans lequel des arêtes de coupe principale et secondaire actives des plaquettes de coupe viennent en engagement, **caractérisé par** l'utilisation d'une ou plusieurs plaquettes de coupe dont l'arête de coupe principale et l'arête de coupe secondaire sont séparées par une arête de coupe de coin dont le rayon est compris entre 0,2 mm et 5 mm, avantageusement entre 0,4 mm et 2,5 mm, tandis que le rayon de courbure de l'arête de coupe principale et de l'arête de coupe secondaire est égal à au moins cinq fois, avantageusement plus de dix fois, le rayon de l'arête de coupe de coin, l'arête de coupe secondaire s'étendant radialement vers l'extérieur en s'incurvant depuis l'arête de coupe de coin avec une composante nettement axiale.

11. Procédé selon la revendication 10, **caractérisé en ce que** l'arête de coupe principale s'étend radialement et de façon sensiblement rectiligne tandis que le rayon de courbure de l'arête de coupe secondaire est compris entre la moitié et le double du rayon de la fraiseuse (rayon maximum de la couronne pivotante à billes).

12. Procédé selon la revendication 10 ou 11, **caractérisé par** l'utilisation de plaquettes de coupe selon l'une des revendications 1 à 7.
